# EUROPÄISCHE PATENTSCHRIFT

(11) **EP 4 434 857 B1**
(45) Veröffentlichungstag und Bekanntmachung des Hinweises auf die Patenterteilung: **21.01.2026**
(21) Anmeldenummer: 23164158.0
(22) Anmeldetag: 24.03.2023
(51) Int. Cl.: B62D 33/04, B60P 7/08

(54) **KOFFERAUFBAU EINES NUTZFAHRZEUGS UND VERFAHREN ZUR HERSTELLUNG EINES KOFFERAUFBAUS**
BOX BODY OF A COMMERCIAL VEHICLE AND METHOD FOR PRODUCING A BOX BODY
STRUCTURE DE COFFRE D'UN VÉHICULE UTILITAIRE ET PROCÉDÉ DE FABRICATION D'UNE STRUCTURE DE COFFRE

(43) Veröffentlichungstag der Anmeldung: 25.09.2024
(73) Patentinhaber: Schmitz Cargobull AG, 48341 Altenberge (DE)
(72) Erfinder: SCHÄFER, Dennis, 48249 Dülmen (DE); WESTHOFF, Ludger, 46354 Südlohn (DE)
(74) Vertreter: Cohausz & Florack

(56) Entgegenhaltungen:
- EP-A1- 0 244 350
- EP-A1- 3 590 796
- US-B2- 7 011 358

## Beschreibung

Die Erfindung betrifft einen Kofferaufbau eines Nutzfahrzeugs, insbesondere Lastkraftwagen, Anhänger oder Sattelauflieger, mit wenigstens einer einen Laderaum seitlich begrenzenden Seitenwand, wobei die Seitenwand ein wenigstens abschnittsweise an den Laderaum grenzendes Seitenwandelement, wenigstens ein Montagemittel zur Montage des Seitenwandelements und wenigstens ein sich in Längsrichtung des Kofferaufbaus über das wenigstens eine Seitenwandelement hinweg und zu beiden Seiten über das wenigstens eine Seitenwandelement hinaus erstreckendes Profilelement umfasst. Ferner betrifft die Erfindung ein Verfahren zur Fertigung eines solchen Kofferaufbaus.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Planeneinheit entlang der Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Planeneinheit, wobei die Rahmenstruktur durch Rungen getragen wird, die sich wenigstens an den Ecken des Nutzfahrzeugs befinden.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem geschäumten Kunststoff gebildet wird. Dabei können die innere und/oder die äußere Decklage selbst bedarfsweise mehrlagig aufgebaut sein. Darüber hinaus sind Kofferaufbauten mit einschaligen Paneelen bekannt, die einen umlaufenden Rahmen oder eine von dem Paneel verschlossene Gitterstruktur aus vertikalen und horizontalen Profilen aufweisen. Das Paneel wird dabei meist aus einem oder aus mehreren Paneelelementen gebildet, die wenigstens im Wesentlichen aus einem glasfaserverstärkten Kunststoff, Stahl oder Aluminium gebildet sind, sowie bedarfsweise lackiert sind.

Um beispielsweise das Dach abzustützen, können die Paneele mit einer Mehrzahl von zur Aussteifung des Paneels vorgesehenen, wenigstens im Wesentlichen quer zur Längsrichtung des Paneels ausgerichteten und in Längsrichtung des Paneels zwischen den Rändern des Paneels angeordneten Pfeilerelementen vorgesehen sein. In einigen Fällen sind die Pfeilerelemente dann ähnlich den Mittelrungen von Planenaufbauten in Längsrichtung des Paneels voneinander beabstandet angeordnet, um einen Holm des Aufbaus zu tragen. Ferner können die Pfeilerelemente an der Innenseite des Paneels mit dem geschlossenen Paneel verbunden sein, das selbst aus mehreren Paneelstrukturelementen gebildet sein und sich über wenigstens im Wesentlichen die gesamte Länge sowie wenigstens im Wesentlichen die gesamte Höhe des Paneels erstrecken kann.

Nutzfahrzeuge mit entsprechenden Kofferaufbauten, werden auch als Trockenfrachter bezeichnet, weil die Seitenwände bzw. Paneele ohne eine isolierende Kernlage aus geschäumtem Kunststoff auskommen und zudem auch nur eine äußere strukturgebende Decklage aufweisen. Diese einschalige Bauweise der Seitenwände erschwert die Montage von Anschlagmitteln zum Anschlagen von Ladungssicherungsvorrichtungen, wie etwa Spanngurten oder spannbaren Ketten. Bei Kofferaufbauten mit zweischaligen Seitenwänden mit einer Kernlage zwischen zwei strukturgebenden Decklagen kann das Anschlagmittel einfach an der inneren Decklage festgelegt und bedarfsweise wenigstens teilweise in der Kernlage aufgenommen werden. Die Anschlagmittel weisen dabei in der Regel Aufnahmen in Form von Öffnungen oder Riegeln auf, in die Haken von Ladungssicherungsvorrichtungen eingehängt werden können, bevor diese zur Ladungssicherung abgespannt werden.

Diese einschalige Bauweise der Seitenwände erschwert in vielen Fällen auch das Beladen des Kofferaufbaus, da die Ladung beim Be- und Entladen gegen die Pfeilerelemente schlagen kann. Zur Vermeidung dessen werden in bestimmten Fällen Scheuerleisten auf etwa mittlerer Höhe der Seitenwand vorgesehen. Alternativ oder zusätzlich können auch andere Seitenwandelemente als Scheuerleisten oder Anschlagmittel vorgesehen sein, die beispielsweise eine ungefähr ebene Seitenwand angrenzend zum Laderaum bereitstellen sollen, wie dies von Kofferaufbauten mit Seitenwänden in zweischaliger Bauweise bekannt ist. Unabhängig von der Art der Seitenwandelemente ist die Montage derselben an den Seitenwänden der Trockenfrachter nicht oder nur bedingt in einer Weise möglich, die bereits aus der Fertigung von Kofferaufbauten mit zweischaligen Seitenwänden bekannt ist.

US 7 011 358 B2 offenbart einen Kofferaufbau ähnlich dem Oberbegriff des Anspruchs 1.

Daher liegt der vorliegenden Erfindung die Aufgabe zugrunde, den Kofferaufbau und das Verfahren jeweils der eingangs genannten und zuvor näher erläuterten Art derart auszugestalten und weiterzubilden, dass eine einfache, kostengünstige und schnelle Montage von Seitenwandelementen ermöglicht wird.

Diese Aufgabe ist bei einem Kofferaufbau nach dem Oberbegriff des Anspruchs 1 dadurch gelöst, dass das wenigstens eine Seitenwandelement durch wenigstens eine Steckverbindung in wenigstens einer Fügerichtung mit dem wenigstens einen Montagemittel formschlüssig verbunden ist und dass das Seitenwandelement durch das Profilelement über eine wenigstens indirekte Verbindung des Profilelements mit dem Seitenwandelement einerseits und mit in Längsrichtung des Kofferaufbaus zu beiden Seiten des wenigstens einen Seitenwandelements vorgesehenen Bauteilen der Seitenwand andererseits gegenüber einem Ausziehen des Seitenwandelements aus dem Montagemittel entgegen der Fügerichtung des Seitenwandelements gesichert ist

Die genannte Aufgabe ist ferner gemäß Anspruch 10 gelöst durch ein Verfahren zur Fertigung eines Kofferaufbaus, insbesondere nach einem der Ansprüche 1 bis 9, mit wenigstens einer Seitenwand und einem von der wenigstens einen Seitenwand seitlich begrenzten Laderaum,
- bei dem ein Seitenwandelement, insbesondere in Form eines Aufnahmen zum Anschlagen von Ladungssicherungsmitteln aufweisenden Anschlagmittels, wenigstens abschnittweise an den Laderaum grenzend über eine Steckverbindung in einer Fügerichtung mit einem Montagemittel formschlüssig verbunden wird und
- bei dem das wenigstens eine Profilelement mit dem Seitenwandelement sowie mit in Längsrichtung des Kofferaufbaus zu beiden Seiten des wenigstens einen Seitenwandelements vorgesehenen Bauteilen der Seitenwand derart wenigstens indirekt verbunden wird, so dass das Seitenwandelement durch die Verbindung des Seitenwandelements mit den seitlich des Seitenwandelements vorgesehenen Bauteilen gegenüber einem Ausziehen des Seitenwandelements aus dem Montagemittel entgegen der Fügerichtung des Seitenwandelements gesichert ist.

Das wenigstens eine Seitenwandelement wird mithin zweifach an der Seitenwand angebracht. Einerseits wird das wenigstens eine Seitenwandelement mit wenigstens einem Montagemittel der Seitenwand zusammengesteckt. Dies erfolgt, indem das Seitenwandelement in wenigstens einer Fügerichtung relativ zum Montagemittel mit dem Montagemittel zusammengesteckt wird. Dabei ist es mithin grundsätzlich egal, ob das Seitenwandelement in das Montagemittel eingesteckt wird oder umgekehrt oder beides. Zudem wird es besonders einfach und daher vielfach bevorzugt sein, wenn das Ineinanderstecken von Seitenwandelementen und Montagemittel in einer einzigen Fügerichtung erfolgt. Das Ineinanderstecken kann aber auch zwei unterschiedliche Fügerichtungen nacheinander umfassen. Denkbar ist auch, dass sich die Fügerichtung beim Fügen kontinuierlich ändert. Die wenigstens eine Fügerichtung ist vorliegend von besonderer Bedeutung, weil die Steckverbindung bedarfsweise oder wenigstens theoretisch durch eine Bewegung des wenigstens einen Seitenwandelements entgegen der wenigstens einen Fügerichtung in Bezug auf das wenigstens eine Montagemittel wieder getrennt werden kann, was vorliegend unerwünscht ist.

Auch wenn die Steckverbindung so ausgebildet ist, dass sich das wenigstens eine Seitenwandelement nicht mehr zufällig vom wenigstens einen Montagemittel trennen sollte, kann dies im Betrieb des Nutzfahrzeugs aufgrund von Verwindungen und Vibrationen meist nicht sicher ausgeschlossen werden. Dies gilt umso mehr, als dass an das Seitenwandelement angeschlagene Ladungssicherungsmittel in ganz unterschiedliche Richtungen an den Seitenwandelementen ziehen können. Ganz besonders gilt dies, wenn nur eine einzige Fügerichtung vorgesehen ist, was aus fertigungstechnischen Gründen meist bevorzugt sein wird.

Besonders einfach ist es beispielsweise, wenn das wenigstens eine Seitenwandelement in einer Fügerichtung von oben nach unten, mithin vertikal, in das wenigstens eine Montagemittel eingehängt wird. Dann kann sich in der vertikalen Richtung nach unten bezogen auf das Seitenwandelement ein Formschluss zwischen dem Seitenwandelement und dem Montagemittel ausbilden. Dann bleibt die Steckverbindung bereits aufgrund der Gewichtskraft des wenigstens einen Seitenwandelements mit dem wenigstens einen Montagemittel gefügt. Aber auch diese Steckverbindung kann sich während der weiteren Fertigung des Kofferaufbaus und/oder während des Betriebs des zugehörigen Nutzfahrzeugs wieder lösen. Bei einer anderen Fügerichtung kann ein Formschluss zwischen dem wenigstens einen Seitenwandelement und dem Montagemittel in einer anderen Richtung ausgebildet werden, auch wenn diese andere Fügerichtung in vielen Fällen weniger bevorzugt sein könnte. Eine solche Fügerichtung kann beispielsweise senkrecht zur Seitenwand und in Richtung der Seitenwand ausgerichtet sein. Das Seitenwandelement kann dann einfach senkrecht auf die Seitenwand aufgesteckt werden. Auch dann kann sich ein Formschluss in der Richtung parallel zur Seitenwand und nach unten ausbilden. Um einen Formschluss auch in der Richtung senkrecht zur Seitenwand und in den Laderaum hinein bereitzustellen, kann die Steckverbindung als Rastverbindung ausgebildet sein.

Um ein versehentliches Lösen der Verbindung von Seitenwandelementen und Montagemittel zu verhindern, wird das wenigstens eine Seitenwandelement zusätzlich wenigstens indirekt mit einem Profilelement verbunden, das sich über das Seitenwandelement und in Längsrichtung des Kofferaufbaus auch darüber hinaus erstreckt. Eine indirekte Verbindung wäre mithin in der Weise denkbar, dass das wenigstens eine Seitenwandelement und zu beiden Seiten des Seitenwandelements vorgesehene Bauteile der Seitenwand mit jeweils einem sehr kurzen Zwischenkörper und dieser Zwischenkörper dann mit dem längeren Profilelement verbunden werden. Funktional bedeutet dies für das Seitenwandelement aber bedarfsweise nichts nennenswert anderes, als wenn das Seitenwandelement direkt mit dem Profilelement verbunden wäre.

Da sich das Profilelement in Längsrichtung des Kofferaufbaus zu beiden Seiten über das wenigstens eine Seitenwandelement hinaus erstreckt, wobei ein mehrteiliges Profilelement in diesem Zusammenhang unschädlich wäre, kann das Profilelement nicht nur mit dem wenigstens einen Seitenwandelement, sondern auch mit Bauteilen der Seitenwand befestigt werden, die sich in Längsrichtung des Kofferaufbaus außerhalb des wenigstens einen Seitenwandelements befinden. Wäre das Profilelement einzig mit dem wenigstens einen Seitenwandelement verbunden, könnte sich dessen Steckverbindung mit dem wenigstens einen Montagemittel trotzdem lösen. Im Falle einer vertikal nach unten gerichteten Fügerichtung wäre dies zwar bedarfsweise aufgrund der zusätzlichen, auf die Steckverbindung einwirkenden Gewichtskraft des Profilelements weniger wahrscheinlich aber jedenfalls nicht ausgeschlossen.

Durch das Verbinden des Profilelements mit dem wenigstens einen Anschlagsmittel und den seitlich des Anschlagsmittels vorgesehenen Bauteilen kann das Seitenwandelement auf einfache Weise gegenüber einem unerwünschten Ausziehen aus dem Montagemittel entgegen der Fügerichtung des Seitenwandelements gesichert werden. Dies gilt insbesondere dann, wenn das Profilelement ohnehin bei der Fertigung des Kofferaufbaus montiert werden muss. Dann kann die Montage des Profilelements kombiniert werden mit der Sicherung des wenigstens einen Seitenwandelements. Fertigungstechnisch kann so der Vorteil einer einfachen und schnellen Fertigung erreicht werden. Das wenigstens eine Seitenwandelement kann beispielsweise schnell und einfach von oben in das wenigstens eine Montagemittel eingehängt werden. Für weitere Fertigungsschritte ist das wenigstens eine Seitenwandelement hinreichend in seiner Position gesichert. Bei einem späteren Fertigungsschritt kann dann ohne bei bereits gefügtem, mithin ausgerichtetem und positioniertem, Seitenwandelement das Profilelement montiert werden und dabei in einem Arbeitsschritt auch die zukünftige Sicherung des wenigstens einen Seitenwandelements gegenüber dem wenigstens einen Montagemittel bewirkt werden. Die Montage des wenigstens einen Seitenwandelements ist mithin zwei oder mehrschrittig, insgesamt aber sehr einfach, zuverlässig, schnell und kostengünstig durchzuführen.

Der besseren Verständlichkeit halber und zur Vermeidung von unnötigen Wiederholungen werden der Kofferaufbau und das Verfahren zur Herstellung des Kofferaufbaus nachfolgend gemeinsam beschrieben, ohne jeweils im Einzelnen zwischen dem Kofferaufbau und dem Verfahren zu unterscheiden. Für den Fachmann ergibt sich jedoch aus dem Kontext, welche Merkmale in Bezug auf den Kofferaufbau und das Verfahren jeweils besonders bevorzugt sind.

Bei einer ersten besonders bevorzugten Ausgestaltung des Kofferaufbaus ist das wenigstens eine Seitenwandelement durch die Steckverbindung mit dem wenigstens einen Montagemittel in einer Richtung senkrecht zur Seitenwand und in den Laderaum hinein formschlüssig gehalten. Ein entsprechender Formschluss hat mehrere Vorteile. Einerseits wird das wenigstens eine Seitenwandelement durch das Eigengewicht des Seitenwandelements an dem wenigstens einen Montagemittel gehalten. Andererseits kann sich das wenigstens eine Seitenwandelement zuverlässig gegenüber dem wenigstens einen Montagemittel abstützen, wenn in das Seitenwandelement ein Ladungssicherungsmittel eingehängt und zur Ladungssicherung gegenüber der Ladung abgespannt werden sollte.

Um noch zuverlässiger zu verhindern, dass das wenigstens eine Seitenwandelement versehentlich von dem wenigstens einen Montagemittel getrennt wird, kann die wenigstens eine Steckverbindung zwischen dem wenigstens einen Seitenwandelement und dem wenigstens einen Montagemittel als Rastverbindung ausgebildet sein. Dies ist insbesondere zweckmäßig, wenn die Seitenwand während der Fertigung des Kofferaufbaus so gedreht oder geschwenkt wird, dass das wenigstens eine Seitenwandelement dabei ansonsten entgegen der Fügerichtung aus dem wenigstens einen Montagemittel herausrutschen könnte.

Wenn das wenigstens eine Seitenwandelement Aufnahmen zum Anschlagen von Ladungssicherungsmitteln aufweist, ist das Seitenwandelement besonders zweckmäßig geeignet, um zum Zwecke der Ladungssicherung genutzt zu werden. Mithin kann das Seitenwandelement als ein Aufnahmen zum Anschlagen von Ladungssicherungsmitteln und/oder von Ladungshilfsmitteln aufweisendes Anschlagmittel ausgebildet sein. In diesem Fall besteht wenigstens eine wesentliche Funktion des Seitenwandelements in der Ladungssicherung oder der Aufnahme von Ladungshilfsmitteln. Unter Ladungssicherungsmitteln können beispielsweise Spanngurte, Sperrbalken oder Rundstangen verstanden werden. Unter Ladungshilfsmitteln können Mittel verstanden werden, die dem Beladen dienen. Es kann sich also beispielsweise um Kleiderstangen zum Anhängen von zu transportierender Kleidung oder um Doppelstockbalken zum Aufstellen von Palletten auf einer zweiten Ebene oberhalb des Ladebodens handeln.

Besonders zweckmäßig ist es in diesem Zusammenhang, wenn das Seitenwandelement in Form des Anschlagmittels Aufnahmen in Form von Öffnungen aufweist. So können Ladungssicherungsvorrichtungen oder Ladungshilfsmittel einfach in die Aufnahmen eingehängt und zuverlässig im wenigstens einen Anschlagmittel gesichert werden. Dies gilt in besonderem Maße, wenn die Öffnungen in Form von Schlüssellöchern oder von aufrecht stehenden Achten ausgebildet sind. Alternativ oder zusätzlich kann das wenigstens eine Seitenwandelement, insbesondere Anschlagmittel, aus Blech gebildet sein. Das Seitenwandelement, insbesondere Anschlagmittel, ist dann einerseits leicht und andererseits stabil. Zudem kann das Seitenwandelement, insbesondere Anschlagmittel, aus Blech einfach hergestellt werden. Die vorgenannten Vorteile werden dabei noch umfangreicher erzielt, wenn das wenigstens eine Seitenwandelement, insbesondere Anschlagmittel, aus einem einzigen Blech gebildet, insbesondere gestanzt, wird.

Die erfindungsgemäßen Vorteile kommen unabhängig davon in besonderer Weise zum Tragen, wenn sich das wenigstens eine Seitenwandelement wenigstens im Wesentlichen von einem Ladeboden bis zu einem Dach des Kofferaufbaus erstreckt. Entsprechende Seitenwandelemente lassen sich aufgrund ihrer Größe ansonsten nur mit einem erheblichen Aufwand montieren. Gleiches gilt aus dem genannten Grund alternativ oder zusätzlich für Seitenwandelemente, die eine Höhe von wenigstens 2 m, vorzugsweise wenigstens 2,5 m, und/oder eine Breite von wenigstens 1 m, insbesondere wenigstens 1,5 m, insbesondere wenigstens 2 m, aufweisen.

Wenn das Profilelement das Seitenwandelement gegenüber einem Ausziehen aus dem Montagemittel entgegen der Fügerichtung durch eine formschlüssige, kraftschlüssige und/oder stoffschlüssige Verbindung mit dem Seitenwandelement sichert, kann das Profilelement einfach mit bekannten Maßnahmen gefügt werden, ohne dass es zwingend besonderer Vorbereitungen hinsichtlich des wenigstens einen Seitenwandelements oder des wenigstens einen Montagemittels bedarf. Aus diesem Grunde kann es sich alternativ oder zusätzlich auch anbieten, wenn das Profilelement mit den in Längsrichtung des Kofferaufbaus zu beiden Seiten des wenigstens einen Seitenwandelements vorgesehenen Bauteilen der Seitenwand formschlüssig, kraftschlüssig und/oder stoffschlüssig verbunden ist.

Der Kofferaufbau kann insgesamt einfach und zugleich recht steif gefertigt werden, wenn das wenigstens eine Montagemittel als wenigstens ein sich wenigstens im Wesentlichen vom Ladeboden bis zum Dach erstreckendes Pfeilerelement zum Aussteifen der Seitenwand ausgebildet ist. Ein solches Pfeilerelement kann dann einerseits die Seitenwand aussteifen und gegebenenfalls das Dach gegenüber dem Ladeboden abstützen und andererseits gleichzeitig als Montagemittel für das wenigstens eine Seitenwandelement dienen. Dabei ist es sowohl für die zuverlässige Montage des Seitenwandelements als auch für die Aussteifung der Seitenwand dienlich, wenn das wenigstens eine Pfeilerelement als Metallprofil, und aus Gewichtsgründen insbesondere als Metallhohlprofil, ausgebildet ist.

Wenn mehrere in Längsrichtung des Kofferaufbaus voneinander, insbesondere regelmäßig, beabstandete Montagemittel vorgesehen sind, können mehrfach in Längsrichtung des Kofferaufbaus verteilt Montagepunkte für das Verbinden von wenigstens einem Seitenwandelement an Montagemitteln bereitgestellt werden. Wenn es sich bei den Montagemitteln um Pfeilerelemente handelt, kann zugleich eine zweckmäßige Aussteifung der Seitenwand sowie eine sichere Abstützung des Dachs gegenüber dem Ladeboden erreicht werden.

Um das wenigstens eine Montagemittel möglichst effizient zu nutzen, können an diesem oder wenigstens an einzelnen von mehreren Montagemitteln seitlich benachbart zueinander zwei unterschiedliche Seitenwandelemente durch eine Steckverbindung in einer Fügerichtung des Seitenwandelements mit dem wenigstens einen Montagemittel formschlüssig verbunden sein. Ein Montagemittel kann so dem Festlegen von zwei unterschiedlichen Seitenwandelementen dienen.

Der Aufbau und damit die Fertigung des Kofferaufbaus können vereinfacht werden, wenn von den in Längsrichtung des Kofferaufbaus zu beiden Seiten des wenigstens einen Seitenwandelements vorgesehenen Bauteilen der Seitenwand wenigstens ein solches Bauteil ein Seitenwandelement und/oder ein Montagemittel ist. Es können also zu beiden Seiten des wenigstens einen Seitenwandelements weitere Seitenwandelemente vorgesehen sein, wobei die Seitenwandelemente untereinander dem Montieren der jeweils anderen Seitenwandelemente dienen. Es kann das Profilelement aber auch an einer oder an beiden Seiten des wenigstens einen Seitenwandelements an einem Montagemittel festgelegt werden. In beiden Fällen werden dann keine zusätzlichen, anderen Bauteile benötigt, um das Profilelement zu montieren. Es können vielmehr ohnehin vorzusehende Seitenwandelemente und/oder Montagemittel genutzt werden. Besonders einfach und zweckmäßig kann es ferner sein, wenn das Profilelement sich wenigstens im Wesentlichen über die gesamte Längserstreckung der Seitenwand und/oder des Laderaums erstreckend vorgesehen ist. So können viele Seitenwandelemente nebeneinander mit einem einzigen Profilelement festgelegt werden. Es können zudem aber auch Profilelemente zum Festlegen der Seitenwandelemente genutzt werden, die zur Herstellung des Kofferaufbaus ohnehin vorzusehen wären, und zwar insbesondere über die gesamte Längserstreckung der Seitenwand und/oder des Laderaums.

In diesem Zusammenhang, aber auch unabhängig davon, ist es grundsätzlich besonders zweckmäßig, wenn das sich zu beiden Seiten über das wenigstens eine Seitenwandelement hinaus erstreckende Profilelement angrenzend an den Ladeboden vorgesehen ist. Ein weiteres Profilelement kann dann angrenzend an das Dach vorgesehen sein. Denkbar wäre es aber auch, nur eines dieser Profilelemente oder ein solches woanders vorzusehen. Im Bereich des Ladebodens und im Bereich des Dachs behindern Profilelemente das Anschlagen von Ladungssicherungsvorrichtungen an den Seitenwandelementen allenfalls gering. Gleiches gilt für die eigentliche Ladungssicherung unter Verwendung der Seitenwandelemente. Im Falle eines Profilelements im Bereich des Ladebodens kann eine ohnehin vorzusehende Sockelscheuerleiste als Profilelement genutzt werden. Im Bereich des Dachs kann als Profilelement zusätzlich oder alternativ ein Eckwinkel genutzt werden, der angrenzend an den Laderaum die Seitenwand mit dem Dach dicht verbindet. So lassen sich funktionelle Synergien hinsichtlich der Sockelscheuerleiste und/oder des Eckwinkels nutzen.

Bei einer ersten besonders bevorzugten Ausgestaltung des Verfahrens wird das Seitenwandelement durch das Profilelement gegenüber einem Ausziehen aus dem Montagemittel entgegen der Fügerichtung durch eine formschlüssige, kraftschlüssige und/oder stoffschlüssige Verbindung mit dem Seitenwandelement gesichert. Infolge dieser zusätzlichen Verbindung kann einfach und kostengünstig sichergestellt werden, dass das wenigstens eine Seitenwandelement die ursprüngliche und vorbestimmte Position an der Seitenwand dauerhaft einnimmt.

Alternativ oder zusätzlich kann das Profilelement mit den in Längsrichtung des Kofferaufbaus zu beiden Seiten des wenigstens einen Seitenwandelements vorgesehenen Bauteilen der Seitenwand formschlüssig, kraftschlüssig und/oder stoffschlüssig verbunden werden. Auch dies ist einfach, schnell und kostengünstig unter Verwendung von an sich bekannten Fügeprinzipien realisierbar.

Die zumindest vorläufige Montage des wenigstens einen Seitenwandelements an dem wenigstens einen Montagemittel kann in einer einfachen und schnellen Weise vorgenommen werden, indem die Steckverbindung zwischen dem wenigstens einen Seitenwandelement und dem wenigstens einen Montagemittel zum formschlüssigen Halten des Seitenwandelements am Montagemittel in einer Richtung senkrecht zur Seitenwand und in den Laderaum hinein ausgebildet wird. Das wenigstens eine Seitenwandelement kann mithin von oben in das wenigstens eine Montagemittel eingesteckt werden, von dem das Seitenwandelement im Falle einer Ladungssicherung mit einer in das Seitenwandelement eingehängten Ladungssicherungsvorrichtung gegenüber einem Ablösen oder Ausbauchen in Richtung des Laderaums abgestützt wird.

Wenn die wenigstens eine Steckverbindung zwischen dem wenigstens einen Seitenwandelement und dem wenigstens einen Montagemittel als Rastverbindung ausgebildet wird, kann das Seitenwandelement auch formschlüssig entgegen einem Ausziehen aus dem Montagemittel entgegen der Fügerichtung gesichert werden. Tatsächlich garantieren aber auch selbst solche Rastverbindungen nicht, dass ein Ausziehen des Abschlagmittels gegenüber dem Montagemittel entgegen der Fügerichtung in jedem Fall verhindert wird.

Das wenigstens eine Seitenwandelement kann zweckmäßig mit an in Längsrichtung des Kofferaufbaus voneinander beabstandeten, insbesondere als Pfeilerelemente ausgebildeten, Montagemitteln verbunden werden. So werden an unterschiedlichen Stellen längs des Kofferaufbaus Stellen geschaffen, an denen das wenigstens eine Seitenwandelement eingesteckt werden kann. Zudem können die Montagemittel bedarfsweise zusätzlich die Seitenwand aussteifen. Wenn mehrere Montagemittel und mehrere Seitenwandelemente vorgesehen sind, können wenigstens einzelne Montagemittel besonders effektiv genutzt werden, wenn an diesen seitlich benachbart zueinander zwei unterschiedliche Seitenwandelemente durch eine Steckverbindung mit dem wenigstens einen Montagemittel verbunden werden.

Die Fertigung des Kofferaufbaus ist einfach und mit einer geringen Anzahl an Bauteilen möglich, wenn beispielsweise das Profilelement mit wenigstens zwei in Längsrichtung des Kofferaufbaus nebeneinander vorgesehenen Seitenwandelementen und/oder mit wenigstens einem, insbesondere als Pfeilerelement ausgebildeten, Montagemittel verbunden wird. Das wenigstens eine weitere Seitenwandelement kann dann ebenfalls dem Anschlagen von Ladungssicherungsmitteln dienen. Alternativ oder zusätzlich kann das Profilelement sich wenigstens im Wesentlichen über die gesamte Länge der Seitenwand und/oder des Laderaums erstreckend vorgesehen werden. So kann das Profilelement eine Funktion über die gesamte Länge der Seitenwand oder des Laderaums bereitstellen. Das Profilelement kann unabhängig davon bei entsprechender Längserstreckung aber auch sehr viele Seitenwandelemente an der Seitenwand festlegen.

Besonders zweckmäßig für die Sicherung von Ladung an der Seitenwand ist es, wenn das Profilelement angrenzend an den Ladeboden und/oder angrenzend zum Dach vorgesehen ist. Der übrige Bereich der Seitenwand am Ort des wenigstens einen Seitenwandelements kann dann zur Ladungssicherung genutzt werden. Dabei ist es zum Zwecke einer einfachen Fertigung zudem bevorzugt, wenn das wenigstens eine Profilelement als Sockelscheuerleiste und/oder als Eckwinkel zum Verbinden der Seitenwand mit dem Dach angrenzend an den Laderaum ausgebildet ist. Sockelscheuerleisten und Eckwinkel werden in vielen Fällen ohnehin benötigt, die dann als weitere Funktion dem Festlegen des wenigstens einen Seitenwandelements dienen können.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes Nutzfahrzeug mit einem erfindungsgemäßen Kofferaufbau in einer schematischen perspektivischen Ansicht,
- Fig. 2: ein Detail des Kofferaufbaus aus Fig. 1 in einer schematischen Ansicht aus dem Laderaum,
- Fig. 3: ein Detail des Kofferaufbaus aus Fig. 1 während der Fertigung in einer Detailansicht aus dem Laderaum,
- Fig. 4A-C: mehrere Schritte des Fügens der Seitenwand aus Fig. 2 in einer Schnittansicht eines Details der Seitenwand und
- Fig. 5: einen weiteren Schritt des Fügens der Seitenwand aus Fig. 2 in einer schematischen Ansicht aus dem Laderaum.

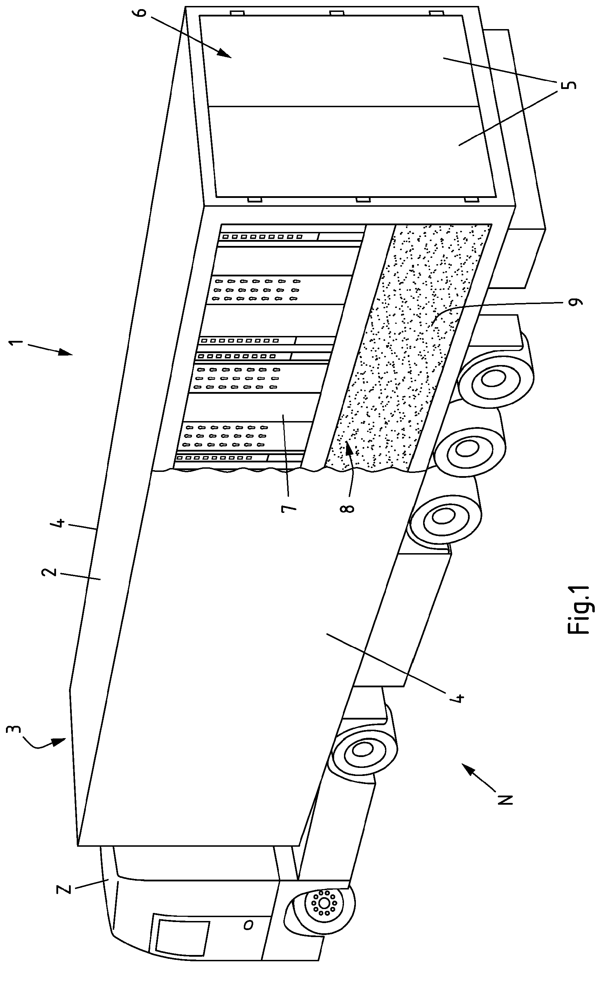

In der Fig. 1 ist ein von einer Zugmaschine Z gezogenes Nutzfahrzeug N in Form eines Sattelaufliegers dargestellt, das einen Kofferaufbau 1 trägt. Der Kofferaufbau 1 umfasst ein festes Dach 2, eine feste Stirnwand 3, feste Seitenwände 4 und eine Rückwandtüren 5 aufweisende Rückwand 6. Die Seitenwände 4 sind dabei nach Art eines Trockenfrachters in einer einschaligen Bauweise gebildet. Die Seitenwände 4 umfassen mithin eine äußere, strukturgebende Decklage in Form eines Paneels 7, das in Längsrichtung des Kofferaufbaus 1 aus mehreren Paneelelementen zusammengesetzt sein kann. Das Paneel 7 weist wenigstens eine Schicht aus einem glasfaserverstärkten Kunststoff, Stahl oder Aluminium auf. Weitere Schichten sind möglich und müssen nicht der Festigkeit des Paneels 7 dienen, sondern können primär die gewünschten Oberflächenbeschaffenheiten bereitstellen. So kann die Außenseite lackiert und die Innenseite mit einer hygienischen Oberfläche beschichtet sein. Auf eine zusätzliche, innere, insbesondere strukturgebende, Decklage wurde bei dem Paneel 7 ebenso verzichtet, wie auf eine Kernlage beispielsweise aus einem geschäumten Kunststoff.

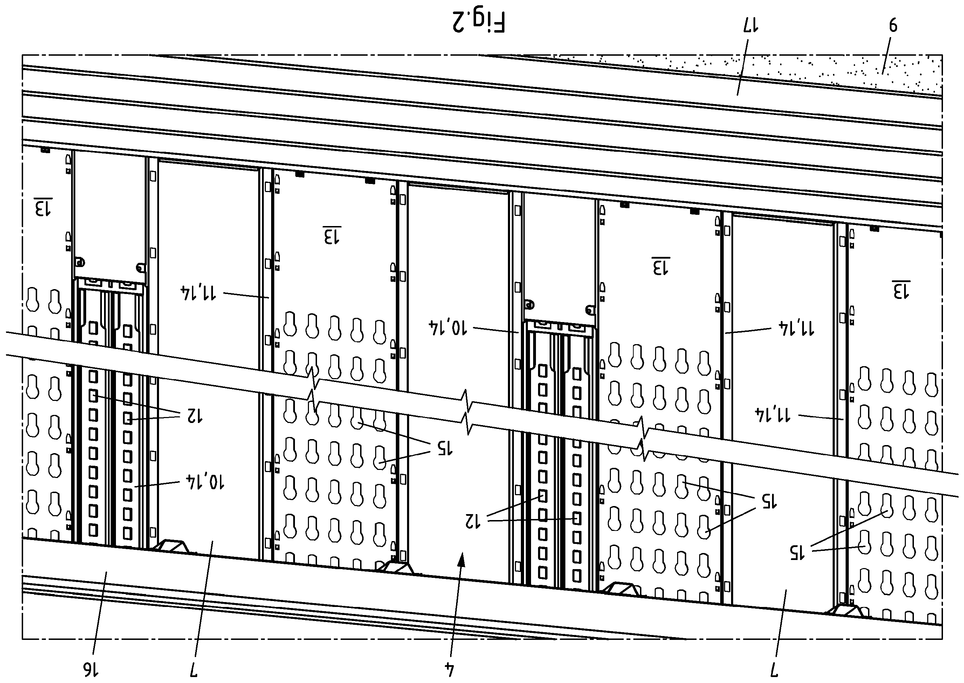

In der Fig. 2 ist die Seitenwand 4 ferner in einem Detail aus dem Laderaum 8 gesehen dargestellt. Zum Abstützen des Dachs 2 gegenüber dem Ladeboden 9 und zum Aussteifen der Seitenwand 3 sind bei dem dargestellten und insoweit bevorzugten Kofferaufbau 1 eine Reihe von Pfeilerelementen 10,11 an der Innenseite des Paneels 7 vorgesehen, die voneinander, insbesondere in regelmäßigen Abständen voneinander, beabstandet sind. Die dargestellten und insoweit bevorzugten Pfeilerelemente 10,11 erstrecken sich senkrecht zum Ladeboden 9 und wenigstens im Wesentlichen vom Dach 2 bis zum Ladeboden 9 des Kofferaufbaus 1. Die Pfeilerelemente 10,11 des dargestellten und insoweit bevorzugten Kofferaufbaus 1 sind unterschiedlich ausgeführt. Es sind Pfeilerelemente 10 vorgesehen, die als Doppelstockschienen ausgebildet sind und Öffnungen 12 zum Einsetzen von Doppelstockbalken aufweisen. Die nicht dargestellten Doppelstockbalken, auf denen Ladung, wie beispielsweise Palletten, abgestellt werden können, erstrecken sich in bekannter Weise quer zum Kofferaufbau 1 von Seitenwand 4 zu Seitenwand 4. Zudem sind Pfeilerelemente 11 ohne Öffnungen zum Einsetzen von Doppelstockbalken vorgesehen. An beiden Arten von Pfeilerelementen 10,11 können Anschlagmittel 13 zum Anschlagen von Ladungssicherungsvorrichtungen, etwa in Form von spannbaren Ketten oder von Spanngurten, festgelegt werden, so dass die Pfeilerelemente 10,11 als Montagemittel 14 für die Seitenwandelemente 13 dienen. Anstelle von Pfeilerelementen 10,11 könnten auch andere Montagemittel 14 zum Montieren der Seitenwandelemente 13 vorgesehen sein. Die Pfeilerelemente 10,11 sind jedoch regelmäßig bevorzugt, weil diese gleichzeitig mehrere Funktionen übernehmen können, nämlich insbesondere das Abstützen des Dachs 2, das Aussteifen der Seitenwand 4, bedarfsweise das Aufnehmen von Doppelstockbalken und das Montieren von Seitenwandelementen 13. Die dargestellten und insoweit bevorzugten Pfeilerelemente 10,11 werden durch ein Metallhohlprofil gebildet, dass jedoch umlaufend nicht geschlossen sein muss.

Die dargestellten und insoweit bevorzugten Seitenwandelemente 13 sind in Form von Anschlagmitteln zum Anschlagen von Ladungssicherungsmitteln und/oder Ladungshilfsmitteln ausgebildet und weisen zu diesem Zweck mehrere Reihen von Aufnahmen 15 in Form von Öffnungen auf, in die Haken oder dergleichen von Ladungssicherungsvorrichtungen wie Spanngurte eingehängt werden können. Es können aber auch andere Ladungssicherungsmittel, Ladungshilfsmittel oder Ausstattungseinrichtungen in die Aufnahmen 15 der Seitenwandelemente 13 eingehängt werden. Die Aufnahmen 15 bilden insbesondere zu diesem Zweck Öffnungen in Form von Schlüssellöchern und sind in mehreren Reihen untereinander vorgesehen. Zwingend ist aber beides nicht. Ebenfalls lediglich bevorzugt ist die Ausgestaltung der Seitenwandelemente 13 aus jeweils einem Blech, das umgeformt, insbesondere gestanzt sein kann, um die gewünschten Funktionen zu erfüllen. Sowohl in der Fig. 1 als auch in der Fig. 2 sind der besseren Anschaulichkeit halber nicht alle Seitenwandelemente 13 dargestellt. Die Seitenwandelemente 13 sind bei dem dargestellten und insoweit bevorzugten Kofferaufbau 1 wenigstens im Wesentlichen über die gesamte Längserstreckung des Kofferaufbaus 1 mit wenigstens teilweiser Ausnahme der Montagemittel 14 in Form der Doppelstockschienen vorgesehen. Die Seitenwandelemente 13 könnten aber auch nur abschnittsweise in Längserstreckung des Kofferaufbaus 1 vorgesehen sein. Es wäre zudem denkbar, dass nur ein einziges Seitenwandelement 13 vorgesehen ist, das dann bedarfsweise viel breiter als die dargestellten Seitenwandelemente 13 ausgebildet sein könnte.

Es ist auch lediglich bevorzugt, aber keinesfalls zwingend erforderlich, dass sich die Seitenwandelemente 13 wenigstens im Wesentlichen vom Ladeboden 9 bis zum Dach 2 erstrecken. Auf diese Weise erstrecken sich die Seitenwandelemente 13 nach oben bis hinter ein Profilelement 16 in Form eines Eckwinkels, der die Verbindung zwischen Seitenwand 4 und Dach 2 angrenzend zum Laderaum 8 überdeckt und sich über die gesamte Länge des Laderaums 8 erstreckt. Nach unten erstrecken sich die Seitenwandelemente 13 bis hinter ein Profilelement 17 einer Sockelscheuerleiste, die sich ebenfalls über die gesamte Länge des Laderaums 8 erstreckt und die Verbindung von Seitenwand 4 und Ladeboden 10 abdeckt. Das Profilelement 17 in Form einer Sockelscheuerleiste ist so ausgebildet, dass Ladung, insbesondere Palletten, beim Be- und Entladen, die Seitenwand 4 nicht beschädigen, sondern an dem Profilelement 17 in Form der Sockelscheuerleiste abgleiten. Das Profilelement 17 in Form der Sockelscheuerleiste ist bei dem dargestellten und insoweit bevorzugten Kofferaufbau 1 ebenso wie das Profilelement 16 in Form des Eckwinkels stoffschlüssig mit den Seitenwandelementen 13 verklebt. Es wäre aber auch eine formschlüssige und/oder kraftschlüssige Verbindung der Sockelscheuerleiste und/oder des Eckwinkels mit den Seitenwandelementen 13 denkbar.

Zudem ist auch eine Sockelscheuerleiste und/oder ein Eckwinkel lediglich bevorzugt. Es könnten auch andere Profilelemente vorgesehen sein. Diese Profilelemente müssten sich dann auch nicht über die gesamte Länge des Laderaums 8 erstrecken.

Die Profilelemente sind jedoch in Längsrichtung des Kofferaufbaus 1 breiter als die Breite wenigstens eines Seitenwandelements 13. Dementsprechend steht das Profilelement 16,17 seitlich zu beiden Längsseiten gegenüber dem Seitenwandelement 13 vor. Diese vorstehenden Bereiche des Profilelements 16,17 ermöglichen die Verbindung des Profilelements 16,17 nicht nur an dem wenigstens einen Seitenwandelement 13, sondern auch noch an weiteren Bauteilen der Seitenwand 4 seitlich neben dem Seitenwandelement 13. Dies sind bei dem dargestellten und insoweit bevorzugten Kofferaufbau 1 weitere Seitenwandelemente 13 und/oder Montagemittel 14. Andere Bauteile wären aber grundsätzlich auch möglich. Zudem ist es bevorzugt, wenn Seitenwandelemente 13 an beiden Seitenwänden 4 vorgesehen sind, insbesondere die beiden Seitenwände 4 gleichartig ausgebildet sind.

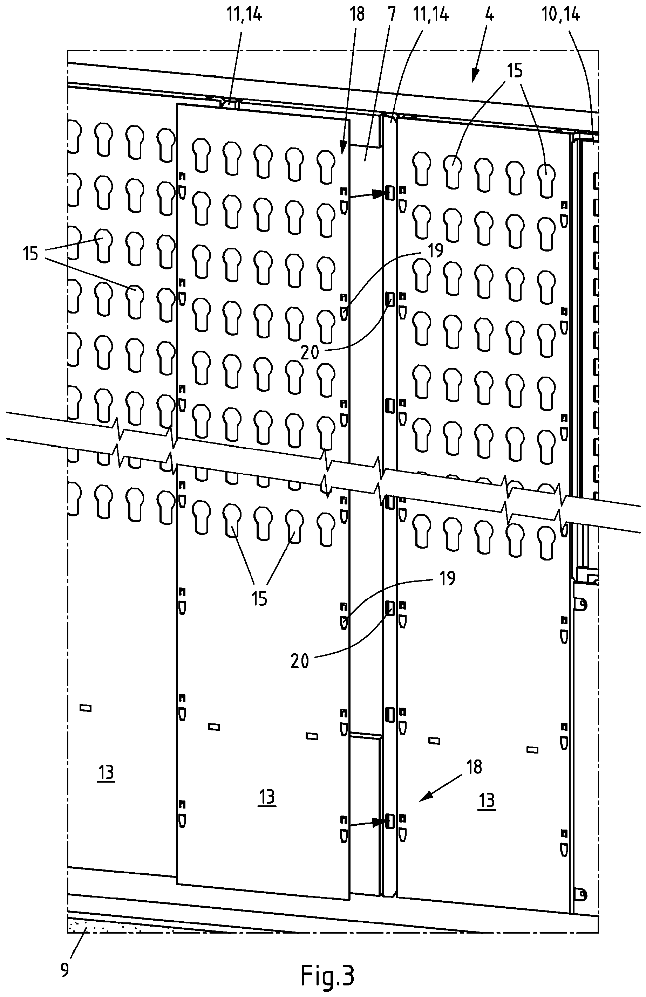

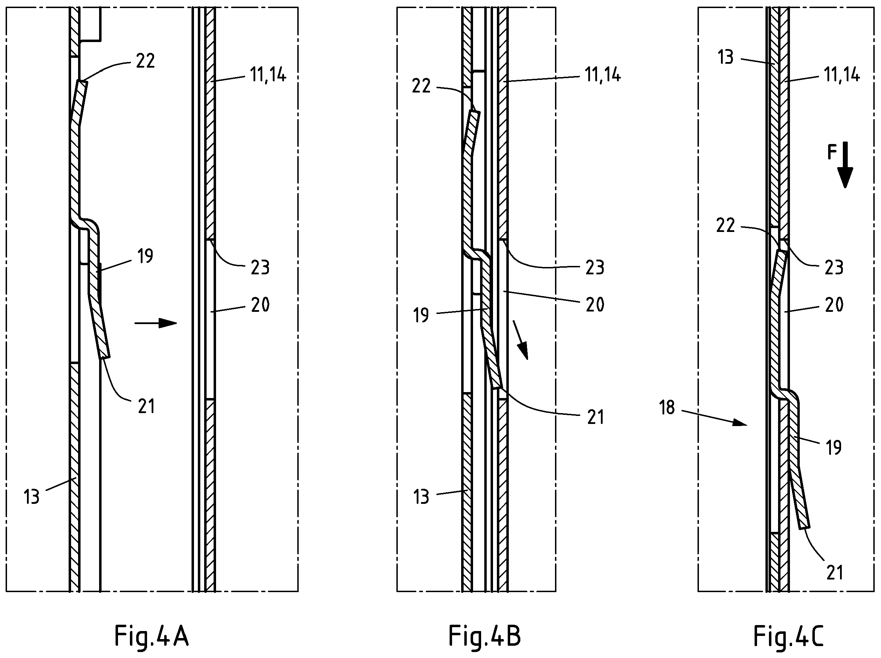

Die Seitenwandelemente 13 sind, wie dies in der Fig. 3 durch die Pfeile angedeutet ist, mit den Montagemitteln 14 verbunden, und zwar über eine Steckverbindung 18. Bei dem dargestellten und insoweit bevorzugten Kofferaufbau 1 sind dazu Laschen 19 an den Seitenwandelementen 13 und Aussparungen 20 zum Einsetzen der Laschen 19 in den Montagemitteln 14 vorgesehen. Die Seitenwandelemente 13 können dabei in die Montagemittel 14 eingesetzt und sodann in einer wenigstens im Wesentlichen vertikal nach unten weisenden Fügerichtung F in die Montagemittel 14 eingesetzt werden. Dabei werden formschlüssige Verbindungen geschaffen, die die Seitenwandelemente 13 in einer Richtung senkrecht zur Seitenwand 4 und in den Laderaum 8 gerichtet sowie nach unten gegenüber den Montagemitteln 14 abstützt. Dies ist insbesondere in den Fig. 4A-C dargestellt. Es könnten aber auch die Montagemittel 14, insbesondere nach oben weisende, Laschen aufweisen, die zum Fügen der Steckverbindung in Aussparungen der Seitenwandelemente 13 von unten eingreifen.

Zum leichteren Einsetzen der Laschen 19 in die Aussparungen 20 der Montagemittel 14 sind die dargestellten und insoweit bevorzugten Laschen 19 abschnittsweise und angrenzend an den freien Enden 21 nach hinten gebogen. Zudem ist das obere Ende 22 der Lasche 19 nach hinten gebogen, so dass dieses obere Ende 22 unter den oberen Rand 23 der Aussparung 20 in dem Montagemittel 14 greift und ein Ausziehen des Seitenwandelements durch einen Formschluss mit dem Montagemittel 14 entgegen der Fügerichtung F, mithin der Auszugsrichtung, verhindern kann. Beim Fertigen der Seitenwand 4 können die Seitenwandelemente 13 lediglich auf die beschriebene Weise in die Montagemittel 14 eingesteckt werden. Ein abschließendes Fügen der Seitenwandelemente 13 kann dann erst zusammen mit der Montage der Seitenwand 4 an den Ladeboden 9 und das Dach 2 erfolgen. Die Seitenwandelemente 13 bleiben in der Zwischenzeit durch die Steckverbindung an den Montagemitteln 14 gehalten.

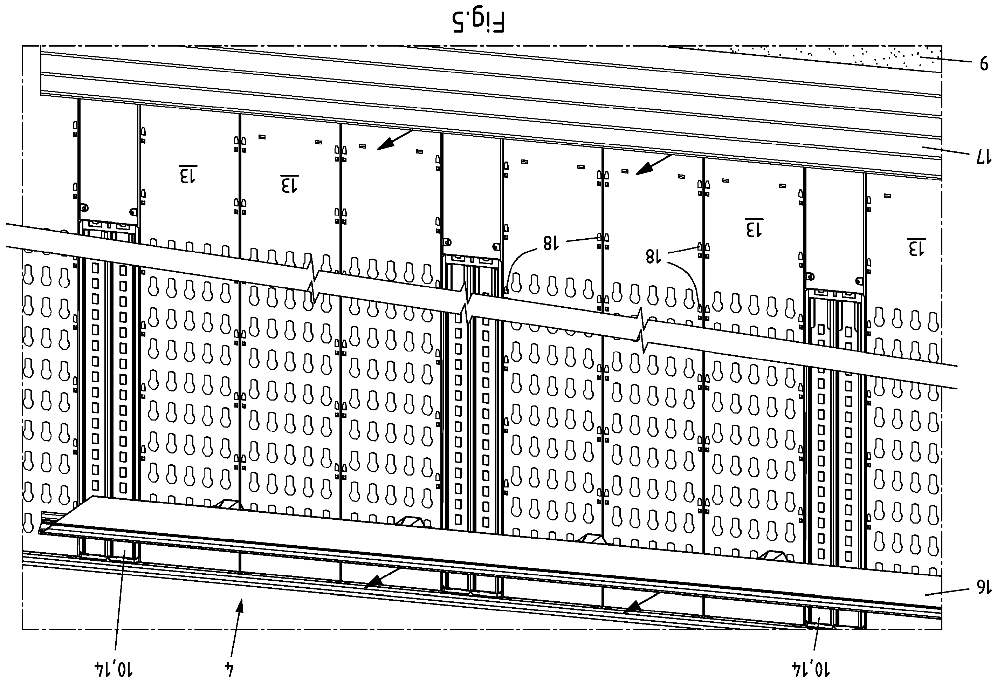

In der Fig. 5 ist ein Detail der Seitenwand 4 mit eingesteckten Seitenwandelementen 13 dargestellt. In einem nächsten Schritt werden die Seitenwandelemente 13 und bestimmte Pfeilerelemente 10 über Profilelemente 16,17 in Form des Eckwinkels und der Sockelscheuerleiste miteinander verbunden. Bei dem dargestellten und insoweit bevorzugten Kofferaufbau 1 werden die Profilelemente 16,17 direkt stoffschlüssig mit den Seitenwandelementen 13 und den Pfeilerelementen verklebt. Nach dem Aushärten dieser stoffschlüssigen Verklebung verhindert diese, dass die Seitenwandelemente 13 entgegen der Fügerichtung F, mithin der Auszugsrichtung, nach oben aus den zugehörigen Montagemitteln 14 herausrutschen können. Die Seitenwandelemente 13 sind wenigstens indirekt über die Profilelemente 16,17 mit weiteren Seitenwandelementen 13 und Montagemitteln 14 derselben Seitenwand 4 seitlich von dem jeweiligen Seitenwandelement 13 verbunden. Die Seitenwandelemente 13 könnten ebenfalls lediglich indirekt mit den Profilelementen 16,17 verbunden sein. Die Seitenwandelemente 13 der Seitenwand 4 sind letztlich jeweils so stabil und dauerhaft mit weiteren Bauteilen der Seitenwand 4 verbunden, dass ein versehentliches Ausziehen eines Seitenwandelements 13 entgegen der wenigstens einen Fügerichtung F, also einer Auszugsrichtung, aus dem zugehörigen Montagemittel 14 verhindert wird. Dies gilt auch für die Dauer des Betriebs des Nutzfahrzeugs N und den damit einhergehenden Verwindungen und Vibrationen.

### Bezugszeichen

- 1: Kofferaufbau
- 2: Dach
- 3: Stirnwand
- 4: Seitenwand
- 5: Rückwandtür
- 6: Rückwand
- 7: Paneel
- 8: Laderaum
- 9: Ladeboden
- 10: Pfeilerelement (Doppelstock)
- 11: Pfeilerelement
- 12: Öffnung
- 13: Seitenwandelement
- 14: Montagemittel
- 15: Aufnahme
- 16: Profilelement (Eckwinkel)
- 17: Profilelement (Sockelscheuerleiste)
- 18: Steckverbindung
- 19: Lasche
- 20: Aussparung
- 21: freies Ende
- 22: oberes Ende
- 23: oberer Rand
- F: Fügerichtung
- N: Nutzfahrzeug
- Z: Zugmaschine

## Patentansprüche

1. Kofferaufbau (1) eines Nutzfahrzeugs (N), insbesondere Lastkraftwagen, Anhänger oder Sattelauflieger, mit wenigstens einer einen Laderaum (8) seitlich begrenzenden Seitenwand (4), wobei die Seitenwand (4) ein wenigstens abschnittweise an den Laderaum (8) grenzendes Seitenwandelement (13), wenigstens ein Montagemittel (14) zur Montage des Seitenwandelements (13) und wenigstens ein sich in Längsrichtung des Kofferaufbaus (1) über das wenigstens eine Seitenwandelement (13) hinweg und zu beiden Seiten über das wenigstens eine Seitenwandelement (13) hinaus erstreckendes Profilelement (16,17) umfasst,
wobei wenigstens eine Seitenwandelement (13) durch wenigstens eine Steckverbindung (18) in wenigstens einer Fügerichtung (F) mit dem wenigstens einen Montagemittel (14) formschlüssig verbunden ist**, dadurch gekennzeichnet, dass** das
Seitenwandelement (13) durch das Profilelement (16,17) über eine wenigstens indirekte Verbindung des Profilelements (16,17) mit dem Seitenwandelement (13) einerseits und mit in Längsrichtung des Kofferaufbaus (1) zu beiden Seiten des wenigstens einen Seitenwandelements (13) vorgesehenen Bauteilen der Seitenwand (4) andererseits gegenüber einem Ausziehen des Seitenwandelements (13) aus dem Montagemittel (14) entgegen der Fügerichtung (F) des Seitenwandelements (13) gesichert ist.

2. Kofferaufbau nach Anspruch 1,
**dadurch gekennzeichnet, dass** das wenigstens eine Seitenwandelement (13) durch die Steckverbindung (18) mit dem wenigstens einen Montagemittel (14) in einer Richtung senkrecht zur Seitenwand (4) und in den Laderaum (8) hinein formschlüssig gehalten ist und/oder dass die wenigstens eine Steckverbindung (18) zwischen dem wenigstens einen Seitenwandelement (13) und dem wenigstens einen Montagemittel (14) als Rastverbindung ausgebildet ist.

3. Kofferaufbau nach Anspruch 1 oder 2,
**dadurch gekennzeichnet, dass** das wenigstens eine Seitenwandelement (13) als Aufnahmen (15) zum Anschlagen von Ladungssicherungsmitteln aufweisendes Anschlagmittel ausgebildet ist, wobei, vorzugsweise, dieAufnahmen (15) in Form von Öffnungen, insbesondere in Form von Schlüssellöchern, ausgebildet sind, und/oder dass das wenigstens eine Seitenwandelement (13) aus, insbesondere einem, Blech gebildet ist.

4. Kofferaufbau nach einem der Ansprüche 1 bis 3,
**dadurch gekennzeichnet, dass** sich das wenigstens eine Seitenwandelement (13) wenigstens im Wesentlichen von einem Ladeboden (8) bis zu einem Dach (2) des Kofferaufbaus (1) erstreckt und/oder dass das wenigstens eine Seitenwandelement (13) eine Höhe von wenigstens 2 m, vorzugsweise wenigstens 2,5 m, und/oder eine Breite von wenigstens 1 m, insbesondere wenigstens 1,5 m, insbesondere wenigstens 2 m, aufweist.

5. Kofferaufbau nach einem der Ansprüche 1 bis 4,
**dadurch gekennzeichnet, dass** das Profilelement (16,17) das Seitenwandelement (13) gegenüber einem Ausziehen aus dem Montagemittel (14) entgegen der Fügerichtung (F) durch eine formschlüssige, kraftschlüssige und/oder stoffschlüssige Verbindung mit dem Seitenwandelement (13) sichert und/oder dass das Profilelement (16,17) mit den in Längsrichtung des Kofferaufbaus (1) zu beiden Seiten des wenigstens einen Seitenwandelements (13) vorgesehenen Bauteilen der Seitenwand (4) formschlüssig, kraftschlüssig und/oder stoffschlüssig verbunden ist.

6. Kofferaufbau nach einem der Ansprüche 1 bis 5,
**dadurch gekennzeichnet, dass** das wenigstens eine Montagemittel (14) als ein sich wenigstens im Wesentlichen vom Ladeboden (9) bis zum Dach (2) erstreckendes Pfeilerelement (10,11) zum Aussteifen der Seitenwand (4) ausgebildet ist und dass, vorzugsweise, das wenigstens eine Pfeilerelement (10,11) als Metallprofil, insbesondere Metallhohlprofil, ausgebildet ist.

7. Kofferaufbau nach einem der Ansprüche 1 bis 6,
**dadurch gekennzeichnet, dass**
mehrere in Längsrichtung des Kofferaufbaus (1) voneinander, insbesondere regelmäßig, beabstandete Montagemittel (14) vorgesehen sind und dass, vorzugsweise, wenigstens an einzelnen Montagemitteln (14) seitlich benachbart zueinander zwei unterschiedliche Seitenwandelement (13) durch eine Steckverbindung (18) in einer Fügerichtung (F) des Seitenwandelements (13) mit dem wenigstens einen Montagemittel (14) formschlüssig verbunden sind.

8. Kofferaufbau nach einem der Ansprüche 1 bis 7,
**dadurch gekennzeichnet, dass**
von den in Längsrichtung des Kofferaufbaus (1) zu beiden Seiten des wenigstens einen Seitenwandelements (13) vorgesehenen Bauteilen der Seitenwand (4) wenigstens ein Bauteil ein Seitenwandelement (13) und/oder ein Montagemittel (14) ist und/oder dass das Profilelement (16,17) sich wenigstens im Wesentlichen über die gesamte Längserstreckung der Seitenwand (4) und/oder des Laderaums (8) erstreckend vorgesehen ist.

9. Kofferaufbau nach einem der Ansprüche 1 bis 8,
**dadurch gekennzeichnet, dass**
das sich zu beiden Seiten über das wenigstens eine Seitenwandelement (13) hinaus erstreckende Profilelement (17) angrenzend an den Ladeboden (9) vorgesehen, insbesondere als Sockelscheuerleiste ausgebildet, ist und/oder dass das sich zu beiden Seiten über das wenigstens eine Seitenwandelement (13) hinaus erstreckende Profilelement (16) angrenzend zum Dach (2) vorgesehen, insbesondere als Eckwinkel ausgebildet, ist.

10. Verfahren zur Fertigung eines Kofferaufbaus (1), insbesondere nach einem der Ansprüche 1 bis 9, mit wenigstens einer Seitenwand (4) und einem von der wenigstens einen Seitenwand (4) seitlich begrenzten Laderaum (8),
- bei dem ein Seitenwandelement, insbesondere in Form eines Aufnahmen (15) zum Anschlagen von Ladungssicherungsmitteln aufweisenden Anschlagmittels, wenigstens abschnittsweise an den Laderaum (8) grenzend über eine Steckverbindung (18) in einer Fügerichtung (F) mit einem Montagemittel (14) formschlüssig verbunden wird und
- bei dem wenigstens ein Profilelement (16,17) mit dem Seitenwandelement (13) sowie mit in Längsrichtung des Kofferaufbaus (1) zu beiden Seiten des wenigstens einen Seitenwandelements (13) vorgesehenen Bauteilen der Seitenwand (4) derart wenigstens indirekt verbunden wird, so dass das Seitenwandelement (13) durch die Verbindung des Seitenwandelements (13) mit den seitlich des Seitenwandelements (13) vorgesehenen Bauteilen gegenüber einem Ausziehen des Seitenwandelements (13) aus dem Montagemittel (14) entgegen der Fügerichtung (F) des Seitenwandelements (13) gesichert ist.

11. Verfahren nach Anspruch 10,
- bei dem das Seitenwandelement (13) durch das Profilelement (16,17) gegenüber einem Ausziehen aus dem Montagemittel (14) entgegen der Fügerichtung (F) durch eine formschlüssige, kraftschlüssige und/oder stoffschlüssige Verbindung mit dem Seitenwandelement (13) gesichert wird und/oder
- bei dem das Profilelement (16,17) mit den in Längsrichtung des Kofferaufbaus zu beiden Seiten des wenigstens einen Seitenwandelements (13) vorgesehenen Bauteilen der Seitenwand (4) formschlüssig, kraftschlüssig und/oder stoffschlüssig verbunden wird.

12. Verfahren nach Anspruch 10 oder 11,
- bei dem die Steckverbindung (18) zwischen dem wenigstens einen Seitenwandelement (13) und dem wenigstens einen Montagemittel (14) zum formschlüssigen Halten des Seitenwandelements (13) am Montagemittel (14) in einer Richtung senkrecht zur Seitenwand und in den Laderaum (8) hinein ausgebildet wird und/oder
- bei dem die wenigstens eine Steckverbindung (18) zwischen dem wenigstens einen Seitenwandelement (13) und dem wenigstens einen Montagemittel (14) als Rastverbindung ausgebildet wird.

13. Verfahren nach einem der Ansprüche 10 bis 12,
- bei dem das wenigstens eine Seitenwandelement (13) mit in Längsrichtung des Kofferaufbaus (1) voneinander beabstandeten, insbesondere als Pfeilerelemente (10,11) ausgebildeten, Montagemitteln (14) verbunden wird und
- bei dem, vorzugsweise, wenigstens an einzelnen Montagemitteln (14) seitlich benachbart zueinander zwei unterschiedliche Seitenwandelement (13) durch eine Steckverbindung (18) mit dem wenigstens einen Montagemittel (14) verbunden werden.

14. Verfahren nach einem der Ansprüche 10 bis 13,
- bei dem das Profilelement (16,17) mit wenigstens zwei in Längsrichtung des Kofferaufbaus (1) nebeneinander vorgesehenen Seitenwandelementen (13) und/oder mit wenigstens einem, insbesondere als Pfeilerelement (10,11) ausgebildeten, Montagemittel (14) verbunden wird und/oder
- bei dem das Profilelement (16,17) sich wenigstens im Wesentlichen über die gesamte Länge der Seitenwand (4) und/oder des Laderaums (8) erstreckend vorgesehen wird.

15. Verfahren nach einem der Ansprüche 10 bis 14,
- bei dem das Profilelement (17) angrenzend an den Ladeboden (9), insbesondere ausgebildet als Sockelscheuerleiste, vorgesehen wird und/oder
- bei dem das Profilelement (16) angrenzend zum Dach (2), insbesondere ausgebildet als Eckwinkel, vorgesehen wird.

## Claims

1. Box body (1) of a commercial vehicle (N), in particular a truck, trailer, or semitrailer, with at least one side wall (4) delimiting a cargo space (8) laterally, wherein the side wall (4) comprises a side wall element (13) bordering at least partially on the cargo space (8), at least one mounting means (14) for mounting the side wall element (13), and at least one profile element (16, 17) extending in the longitudinal direction of the box body (1) beyond the at least one side wall element (13) and beyond the at least one side wall element (13) on both sides, wherein at least one side wall element (13) is connected in a form-fitting manner to the at least one mounting means (14) by at least one plug connection (18) in at least one joint direction (F), **characterized in that** the side wall element (13) is secured by the profile element (16, 17) via at least an indirect connection of the profile element (16, 17) to the side wall element (13) on the one hand and to components of the side wall (4) provided on both sides of the at least one side wall element (13) in the longitudinal direction of the box body (1) on the other hand, against the side wall element (13) being pulled out of the mounting means (14) against the joining direction (F) of the side wall element (13).

2. Box body according to claim 1,
**characterized in that**
the at least one side wall element (13) is held in a form-fitting manner by the plug connection (18) with the at least one mounting means (14) in a direction perpendicular to the side wall (4) and into the cargo space (8), and/or that the at least one plug connection (18) between the at least one side wall element (13) and the at least one mounting means (14) is designed as a snap-fit connection.

3. Box body according to claim 1 or 2,
**characterized in that**
the at least one side wall element (13) is designed as an attachment means having receptacles (15) for attaching load securing means, wherein, preferably, the receptacles (15) are designed in the form of openings, in particular in the form of keyholes, and/or that the at least one side wall element (13) is formed from, in particular one, sheet metal.

4. Box body according to one of claims 1 to 3,
**characterized in that**
the at least one side wall element (13) extends at least substantially from a cargo floor (8) to a roof (2) of the box body (1) and/or that the at least one side wall element (13) has a height of at least 2 m, preferably at least 2.5 m, and/or a width of at least 1 m, in particular at least 1.5 m, in particular at least 2 m.

5. Box body according to one of claims 1 to 4,
**characterized in that**
the profile element (16, 17) secures the side wall element (13) against being pulled out of the mounting means (14) in the opposite direction to the joint direction (F) by means of a form-fitting, force-fitting and/or material-fitting connection with the side wall element (13) and/or that the profile element (16, 17) is connected to the components of the side wall (4) provided on both sides of the at least one side wall element (13) in the longitudinal direction of the box body (1) in a form-fitting, force-fitting and/or material-fitting manner.

6. Box body according to one of claims 1 to 5,
**characterized in that**
the at least one mounting means (14) is designed as a pillar element (10, 11) extending at least substantially from the cargo floor (9) to the roof (2) for stiffening the side wall (4), and preferably the at least one pillar element (10, 11) is designed as a metal profile, in particular a hollow metal profile.

7. Box body according to one of claims 1 to 6,
**characterized in that**
a plurality of mounting means (14) are provided spaced apart, in particular regularly spaced apart, in the longitudinal direction of the box body (1), and that, preferably, at least on individual mounting means (14), two different side wall elements (13) laterally adjacent to one another are connected in a form-fitting manner to the at least one mounting means (14) by a plug connection (18) in a joint direction (F) of the side wall element (13).

8. Box body according to one of claims 1 to 7,
**characterized in that**
of the components of the side wall (4) provided on both sides of the at least one side wall element (13) in the longitudinal direction of the box body (1), at least one component is a side wall element (13) and/or a mounting means (14) and/or that the profile element (16, 17) is provided extending at least substantially over the entire longitudinal extent of the side wall (4) and/or the cargo space (8).

9. Box body according to one of claims 1 to 8,
**characterized in that**
the profile element (17) extending beyond the at least one side wall element (13) on both sides is provided adjacent to the cargo floor (9), in particular as a base scuff strip, and/or that the profile element (16) extending beyond the at least one side wall element (13) on both sides is provided adjacent to the roof (2), in particular as a corner bracket.

10. Method for manufacturing a box body (1), in particular according to one of claims 1 to 9, with at least one side wall (4) and a cargo space (8) bounded laterally by the at least one side wall (4),
- in which a side wall element, in particular in the form of an attachment means having a receptacle (15) for attaching load securing means, is connected, at least partially bordering on the cargo space (8), via a plug connection (18) in a joint direction (F) to a mounting means (14) in a form-fitting manner, and
- in which at least one profile element (16, 17) is connected at least indirectly to the side wall element (13) and to components of the side wall (4) provided on both sides of the at least one side wall element (13) in the longitudinal direction of the box body (1), in such a way that the side wall element (13) is secured against being pulled out of the mounting means (14) against the joint direction (F) of the side wall element (13) by the connection of the side wall element (13) to the components provided on the sides of the side wall element (13).

11. Method according to claim 10,
- in which the side wall element (13) is secured by the profile element (16, 17) against being pulled out of the mounting means (14) against the joint direction (F) by a form-fitting, force-fitting and/or material-fitting connection with the side wall element (13) and/or
- in which the profile element (16, 17) is connected to the components of the side wall (4) provided on both sides of the at least one side wall element (13) in the longitudinal direction of the box body in a form-fitting, force-fitting and/or material-fitting manner.

12. Method according to claim 10 or 11,
- in which the plug connection (18) between the at least one side wall element (13) and the at least one mounting means (14) for form-fittingly holding the side wall element (13) on the mounting means (14) is formed in a direction perpendicular to the side wall and into the cargo space (8), and/or
- in which the at least one plug connection (18) between the at least one side wall element (13) and the at least one mounting means (14) is formed as a snap-fit connection.

13. Method according to one of claims 10 to 12,
- in which the at least one side wall element (13) is connected to, in particular designed as pillar elements (10, 11), mounting means (14) spaced apart in the longitudinal direction of the box body (1) and
- in which, preferably, at least on individual mounting means (14), two different side wall elements (13) laterally adjacent to one another are connected to the at least one mounting means (14) by a plug connection (18).

14. Method according to one of claims 10 to 13,
- in which the profile element (16, 17) is connected to at least two side wall elements (13) provided next to each other in the longitudinal direction of the box body (1) and/or to at least one mounting means (14), in particular designed as a pillar element (10, 11), and/or
- in which the profile element (16, 17) is provided extending at least substantially over the entire length of the side wall (4) and/or the cargo space (8).

15. Method according to one of claims 10 to 14,
- in which the profile element (17) is provided adjacent to the cargo floor (9), in particular designed as a base scuff strip, and/or
- in which the profile element (16) is provided adjacent to the roof (2), in particular designed as a corner bracket.

## Revendications

1. Carrosserie fourgon (1) d'un véhicule utilitaire (N), en particulier d'un camion, d'une remorque ou d'une semi-remorque, comportant au moins une paroi latérale (4) délimitant latéralement un espace de chargement (8), la paroi latérale (4) comprenant un élément de paroi latérale (13) bordant au moins partiellement l'espace de chargement (8), au moins un moyen de montage (14) pour le montage de l'élément de paroi latérale (13) et au moins un élément profilé (16, 17) s'étendant dans le sens longitudinal de la caisse (1) au-delà de l'au moins un élément de paroi latérale (13) et s'étendant des deux côtés au-delà de l'au moins un élément de paroi latérale (13), au moins un élément de paroi latérale (13) étant relié par complémentarité de forme à l'au moins un moyen de montage (14) par au moins une liaison enfichable (18) dans au moins une direction d'assemblage (F), **caractérisé en ce que** l'élément de paroi latérale (13) est sécurisé contre un retrait de l'élément de paroi latérale (13) hors du moyen de montage (14) à l'encontre de la direction d'assemblage (F) de l'élément de paroi latérale (13), par l'élément profilé (16, 17) via au moins une liaison indirecte de l'élément profilé (16, 17) d'une part avec l'élément de paroi latérale (13) et d'autre part avec des composants de la paroi latérale (4) prévus dans la direction longitudinale de le carrosserie fourgon (1) de part et d'autre dudit au moins un élément de paroi latérale (13)..

2. Carrosserie fourgon selon la revendication 1,
**caractérisé en ce que**
le au moins un élément de paroi latérale (13) est maintenu par la connexion enfichable (18) avec le au moins un moyen de montage (14) dans une direction perpendiculaire à la paroi latérale (4) et dans l'espace de chargement (8) et/ou **en ce que** la au moins une connexion enfichable (18) entre l' la au moins une paroi latérale (13) et le au moins un moyen de montage (14) est conçue comme une connexion à encliquetage.

3. Carrosserie fourgon selon la revendication 1 ou 2,
**caractérisé en ce que**
le au moins un élément de paroi latérale (13) est conçu comme un moyen de fixation présentant des logements (15) pour la fixation de moyens de sécurisation du chargement, les logements (15) étant de préférence conçus sous forme d'ouvertures, en particulier sous forme de trous de serrure, et/ou **en ce que** le au moins un élément de paroi latérale (13) est formé à partir d'une tôle, en particulier d'une seule tôle.

4. Carrosserie fourgon selon l'une des revendications 1 à 3,
**caractérisé en ce que**
le au moins un élément de paroi latérale (13) s'étend au moins essentiellement d'un plancher de chargement (8) jusqu'à un toit (2) de la structure de coffre (1) et/ou **en ce que** le au moins un élément de paroi latérale (13) présente une hauteur d'au moins 2 m, de préférence d'au moins 2,5 m, et/ou une largeur d'au moins 1 m, en particulier d'au moins 1,5 m, en particulier d'au moins 2 m.

5. Caisse selon l'une des revendications 1 à 4,
**caractérisé en ce que**
l'élément profilé (16, 17) empêche l'élément de paroi latérale (13) de se retirer du moyen de montage (14) dans le sens opposé au sens d'assemblage (F) grâce à une liaison par complémentarité de forme, par adhérence et/ou par liaison de matière avec l'élément de paroi latérale (13) et/ou **en ce que** l'élément profilé (16, 17) est relié par complémentarité de forme, par adhérence et/ou par liaison matière aux composants de la paroi latérale (4) prévus dans le sens longitudinal de la structure de coffre (1) des deux côtés du au moins un élément de paroi latérale (13).

6. Carrosserie fourgon selon l'une des revendications 1 à 5,
**caractérisé en ce que**
le ou les moyens de montage (14) sont conçus comme un élément de pilier (10, 11) s'étendant au moins essentiellement du plancher de chargement (9) jusqu'au toit (2) afin de renforcer la paroi latérale (4) et que, de préférence, le ou les éléments de pilier (10, 11) sont conçus comme des profilés métalliques, en particulier des profilés métalliques creux.

7. Caisse selon l'une des revendications 1 à 6,
**caractérisé en ce que**
plusieurs moyens de montage (14) espacés les uns des autres, en particulier régulièrement, dans la direction longitudinale de le carrosserie fourgon (1) sont prévus et **en ce que**, de préférence, au moins sur certains moyens de montage (14), deux éléments de paroi latérale (13) différents, adjacents latéralement l'un à l'autre, sont reliés de manière ajustée par un raccord enfichable (18) dans une direction d'assemblage (F) de l'élément de paroi latérale (13) audit au moins un moyen de montage (14).

8. Carrosserie de fourgon selon l'une des revendications 1 à 7, **caractérisé en ce que**
parmi les composants de la paroi latérale (4) prévus dans la direction longitudinale de le carrosserie fourgon (1) de part et d'autre dudit au moins un élément de paroi latérale (13), au moins un composant est un élément de paroi latérale (13) et/ou un moyen de montage (14) et/ou **en ce que** l'élément profilé (16, 17) est prévu pour s'étendre au moins essentiellement sur toute la longueur de la paroi latérale (4) et/ou de l'espace de chargement (8)..

9. Carrosserie fourgon selon l'une des revendications 1 à 8, **caractérisé en ce que**
l'élément profilé (17) s'étendant des deux côtés au-delà de l'au moins un élément de paroi latérale (13) est prévu à proximité du plancher de chargement (9), est notamment conçu comme une plinthe de socle, et/ou que l'élément profilé (16) s'étendant des deux côtés au-delà de l'au moins un élément de paroi latérale (13) est prévu de manière adjacente au toit (2), et est notamment conçu comme une cornière.

10. Procédé de fabrication d'une structure de coffre (1), en particulier selon l'une des revendications 1 à 9, avec au moins une paroi latérale (4) et un espace de chargement (8) délimité latéralement par la au moins une paroi latérale (4),
- dans lequel un élément de paroi latérale, en particulier sous la forme d'un moyen de butée présentant un logement (15) pour la fixation de moyens de sécurisation de chargement, est relié au moins par sections à l'espace de chargement (8) par une liaison enfichable (18) dans une direction d'assemblage (F) avec un moyen de montage (14) par complémentarité de forme et
- dans lequel au moins un élément profilé (16, 17) est relié, au moins indirectement, à l'élément de paroi latérale (13) ainsi qu'aux composants de la paroi latérale (4) prévus dans la direction longitudinale de le carrosserie fourgon (1) de part et d'autre dudit au moins un élément de paroi latérale (13), de telle sorte que l'élément de paroi latérale (13) est sécurisé, par la liaison de l'élément de paroi latérale (13) avec les composants prévus latéralement audit élément de paroi latérale (13), contre un retrait de l'élément de paroi latérale (13) hors du moyen de montage (14) à l'encontre de la direction d'assemblage (F) de l'élément de paroi latérale (13).

11. Procédé selon la revendication 10,
- dans lequel l'élément de paroi latérale (13) est empêché de sortir du moyen de montage (14) dans le sens opposé au sens d'assemblage (F) par une liaison par complémentarité de forme, par adhérence et/ou par liaison de matière avec l'élément de paroi latérale (13) et/ou
- dans lequel l'élément profilé (16, 17) est relié par complémentarité de forme, par adhérence et/ou par liaison matière aux composants de la paroi latérale (4) prévus dans le sens longitudinal de la structure de coffre des deux côtés du au moins un élément de paroi latérale (13).

12. Procédé selon la revendication 10 ou 11,
- dans lequel la connexion enfichable (18) entre au moins un élément de paroi latérale (13) et au moins un moyen de montage (14) est conçue pour maintenir l'élément de paroi latérale (13) sur le moyen de montage (14) par complémentarité de forme dans une direction perpendiculaire à la paroi latérale et dans l'espace de chargement (8) et/ou
- dans lequel la au moins une connexion enfichable (18) entre le au moins un élément de paroi latérale (13) et le au moins un moyen de montage (14) est réalisée sous forme de connexion à encliquetage.

13. Procédé selon l'une des revendications 10 à 12,
- dans lequel le au moins un élément de paroi latérale (13) est relié à des moyens de montage (14) espacés les uns des autres dans la direction longitudinale de la structure de coffre (1), en particulier conçus comme des éléments de pilier (10, 11), et
- dans lequel, de préférence, au moins sur des moyens de montage individuels (14) latéralement adjacents les uns aux autres, deux éléments de paroi latérale différents (13) sont reliés par une liaison enfichable (18) au moins un moyen de montage (14).

14. Procédé selon l'une des revendications 10 à 13,
- dans lequel l'élément profilé (16, 17) est relié à au moins deux éléments de paroi latérale (13) prévus côte à côte dans le sens longitudinal de la structure de coffre (1) et/ou à au moins un moyen de montage (14) conçu en particulier comme élément de pilier (10, 11) et/ou
- dans lequel l'élément profilé (16, 17) est prévu de manière à s'étendre au moins essentiellement sur toute la longueur de la paroi latérale (4) et/ou de l'espace de chargement (8).

15. Procédé selon l'une des revendications 10 à 14,
- dans lequel l'élément profilé (17) est prévu de manière adjacente au plancher de chargement (9), en particulier sous la forme d'une plinthe de socle, et/ou
- dans lequel l'élément profilé (16) est prévu à proximité du toit (2), en particulier sous la forme d'une cornière d'angle.
